Europäisches Patentamt

European Patent Office

Office européen des brevets

(11) Veröffentlichungsnummer: **0 267 510**
A1

(12) **EUROPÄISCHE PATENTANMELDUNG**

(21) Anmeldenummer: **87116047.9**

(22) Anmeldetag: **31.10.87**

(51) Int. Cl.⁴ **B29C 63/06 , B65D 30/08**

(30) Priorität: **11.11.86 CH 4500/86**

(43) Veröffentlichungstag der Anmeldung:
**18.05.88 Patentblatt 88/20**

(84) Benannte Vertragsstaaten:
**AT DE ES FR GB IT**

�==Anmelder: **Starlinger-Huemer, Franz X.**
**Sonnenuhrgasse 4**
**A-1060 Wien(AT)**

(72) Erfinder: **Starlinger-Huemer, Franz X.**
**Sonnenuhrgasse 4**
**A-1060 Wien(AT)**

(74) Vertreter: **Petschner, Goetz**
**Patentanwaltsbüro G. Petschner**
**Seidengasse 18**
**CH-8001 Zürich(CH)**

(54) Verfahren zur Erzeugung eines rohrförmigen Halbfabrikates aus Kunststoff für die Herstellung von Container-Säcken.

(57) Beim Verfahren zur Erzeugung eines rohrförmigen Halbfabrikates aus Kunststoff für die Herstellung von Säcken wird mindestens ein rohrförmiges Extrudat aus einem Thermoplast mit Folienbändchen oder dgl. aus einem Kunststoff oder dgl. in seiner Umfangsrichtung und/oder in seiner Längsrichtung armiert und eine weitere rohrförmige Mantel-Folie aus einem Thermoplast auf die erste, armierte rohrförmige Kunststoff-Folie aufgebracht wird, wonach das Ganze in warmweichem Zustand miteinander verbunden wird. Dabei wird die weitere rohrförmige Kunststoff-Folie in Form von einzeln, vorzugsweise kontinuierlich zugeführten Folienbahnen aufgebracht, wobei die Folienbahnen an ihren Stosskanten miteinander zur rohrförmigen Mantel-Folie verschweisst oder verklebt werden.

Durch diese Massnahme wird es möglich, nicht nur beliebig dünne Folienbahnen zur rohrförmigen Mantel-Folie zusammenzufügen, sondern zudem auch die Wandungsstärke der Mantel-Folie dem Bedarf anzupassen, wofür lediglich die Vorratsrollen der Folienbahnen ausgetauscht werden müssen.

Fig.1

## Verfahren zur Erzeugung eines rohrförmigen Halbfabrikates aus Kunststoff für die Herstellung von Container-Säcken

Die vorliegende Erfindung betrifft ein Verfahren zur Erzeugung eines rohrförmigen Halbfabrikates aus Kunststoff für die Herstellung von Verpackungssäcken, grossvolumigen Containersäcken oder dgl., bei welchem mindestens ein rohrförmiges Extrudat aus einem Thermoplast mit Folienbändchen oder dgl. aus einem Kunststoff oder dgl. in seiner Umfangsrichtung und/oder in seiner Längsrichtung armiert und eine weitere rohrförmige Mantel-Folie aus einem Thermoplast auf die erste, armierte rohrförmige Kunststoff-Folie aufgebracht wird, wonach das Ganze in warmweichem Zustand miteinander verbunden wird.

Neben von auf Rundwebmaschinen aus Kunststoffbändchen hergestellten rohrförmigen Halbfabrikaten werden auch auf Extrusionsanlagen aus einem weichgemachten Thermoplast erzeugte rohrförmige Kunststoff-Folien zur Herstellung von Verpakkungssäcken, grossvolumigen Containersäcken und dgl. Behält nisse herangezogen.

Um dabei die für solche Behältnisse erforderliche Tragfestigkeit zu erzielen, wurden die von der Herstellung von Schläuchen bekannten Armierungstechniken im wesentlichen übernommen.

Entsprechend ist es bei neueren Verfahren üblich, eine extrudierte Schlauchfolie aus thermoplastischem Kunststoff direkt nach dem Extrudieren mit Folienbändchen aus Kunststoff beispielsweise in Umfangsrichtung spiralförmig zu armieren, um dann in koextrudierender Weise eine weitere Schlauchfolie aus thermoplastischem Kunststoff als Ummantelung aufzubringen.

Unter dem Gesichtspunkt, dass solche Verfahren der Massenherstellung von Endprodukten dienen, ergibt sich ein grosser Nachteil hier im grossen Materialverbrauch, der beim Koextrudieren der äusseren Mantelfolie durch die zwangsläufige Wandungsdicke des rohrförmigen Extrudates entsteht, obwohl von der Gebrauchsfestigkeit solcher Endprodukte die Wandungsstärke der Mantel-Folie um einiges geringer sein könnte.

Es ist somit Aufgabe der vorliegenden Erfindung, ein Verfahren zur Erzeugung eines rohrförmigen Halbfabrikates aus Kunststoff für die Herstellung von Container-Säcken u. dgl. so auszugestalten, dass eine Ummantelung des armierten rohrför migen Extrudates mit einer Folie gelingt, welche eine wesentlich geringere Wandungsstärke aufweist, als dies bisher möglich war.

Dies wird erfindungsgemäss dadurch erreicht, dass die weitere rohrförmige Kunststoff-Folie in Form von einzeln, vorzugsweise kontinuierlich zugeführten Folienbahnen aufgebracht wird, wobei die Folienbahnen an ihren Stosskanten miteinander zur rohrförmigen Mantel-Folie verschweisst oder verklebt werden.

Durch diese Massnahme wird es möglich, nicht nur beliebig dünne Folienbahnen zur rohrförmigen Mantel-Folie zusammenzufügen, sondern zudem auch die Wandungsstärke der Mantel-Folie dem Bedarf anzupassen, wofür lediglich die Vorratsrollen der Folienbahnen ausgetauscht werden müssen.

Dies ist im Hinblick auf die Massenfabrikation der Endprodukte von höchster wirtschaftlicher Bedeutung.

Entsprechend ist es sinnvoll, wenn die einzelnen, zur Bildung der Mantel-Folie herangeführten Folienbahnen von Vorratsmitteln über Umlenkrollen an die Mantelfläche des armierten rohrförmigen Extrudates angelegt werden, wobei die Folienbahnen in Längsrichtung und gleichmässig am Umfang verteilt am armierten rohrförmigen Extrudat angelegt werden kön nen, oder die Folienbahnen das armierte rohrförmige Extrudat umkreisen und spiralförmig verlaufend angelegt werden können.

Zur Verbindung der Folienbahnen ist es zudem vorteilhaft, wenn die Folienbahnen an ihren Stosskanten im Bereich eines heizbaren inneren Kalibrierungsringes in warmweichem Zustand miteinander verbunden werden.

Es ist weiter möglich die innere und die äussere rohrförmige Folie durch den Lückenbereich der Armierung hindurch miteinander zu verbinden, wobei dann vorteilhaft für das innere und das äussere rohrförmige Extrudat ein Material von niedrigerem Schmelzpunkt als der Schmelzpunkt des Materials der Armierung verwendet wird.

Diese Massnahmen erlauben einen fixierten Wandungsaufbau für die Behälter ohne die geringste Beeinträchtigung der Festigkeit der armierenden Folienbändchen, da diese am "Verschweissungsprozess" nicht teilnehmen.

Für diesen "Verschweissungsprozess" ist es vorteilhaft, wenn die innere armierte und die äussere rohrförmige Kunststoff-Folie im Bereich des inneren Kalibrierungsringes in warmweichem Zustand miteinander verbunden werden.

Weiter betrifft die vorliegende Erfindung ein Behältnis, hergestellt nach dem erfindungsgemässen Verfahren.

Beispielsweise Ausführungsformen einer Einrichtung zur Durchführung des erfindungsgemässen Verfahrens bzw. eines nach diesem Verfahren hergestellten Halbfabrikates, sind nachfolgend anhand der Zeichnung näher erläutert. Es zeigen:

Fig. 1 in schematischer, schaubildartiger und teilweise geschnittener Darstellung ein der Herstellung von Behältnissen dienendes, nach dem erfindungsgemässen Verfahren erzeugtes Halbfabrikat; und

Fig. 2 in schematischer Teil-Darstellung eine Einrichtung zur Durchführung des erfindungsgemässen Verfahrens zur Erzeugung des Halbfabrikates gemäss Fig. 1.

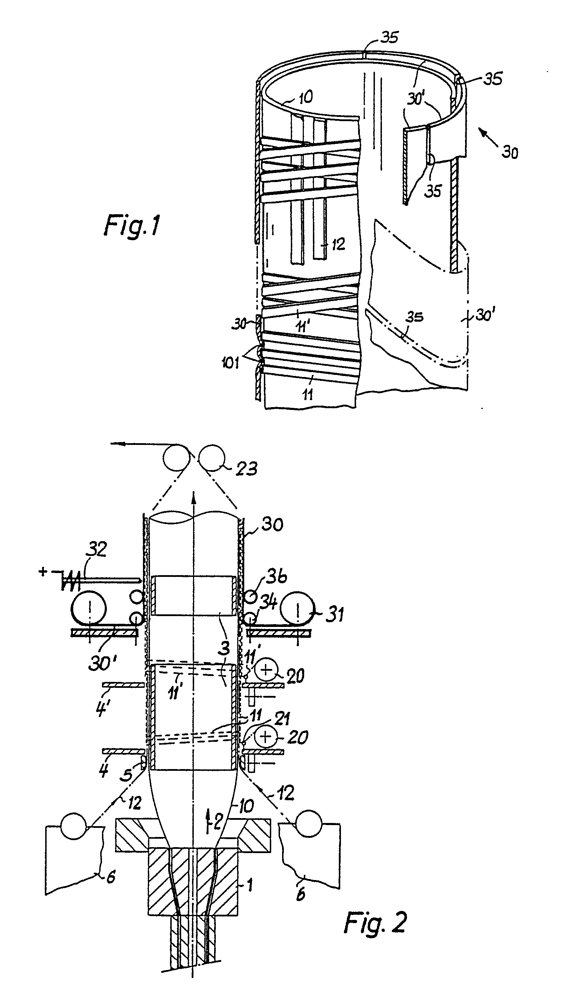

Zur Erläuterung des erfindungsgemässen Verfahrens zur Erzeugung eines rohrförmigen Halbfabrikates aus einem Kunststoff, welches die Herstellung von Verpackungssäcken, grossvolumigen Containersäcken oder dgl. der vorgenannten Art gestattet, sei auf das in Fig. 1 veranschaulichte Halbfabrikat verwiesen, an welchem in unterschiedlichen Bereichen einige Varianten im strukturellen Aufbau dargestellt sind.

Ausgegangen wird von einem rohrförmigen Extrudat 10 aus einem weichgemachten Thermoplast, das im noch warmweichen Zustand oder ab Vorratsrolle wieder in warmweichen Zustand gebracht und dann mit Folienbändchen aus einem Kunststoff in Umfangsrichtung 11 bzw. 11' und/oder in Längsrichtung 12 armiert wird.

Wie in der Darstellung der Fig. 1 von unten nach oben bzw. von links nach rechts im Einzelnen veranschaulicht ist, kann die rohrförmige Kunststoff-Folie 10 kontinuierlich mit einem Folienbändchen 11 umwickelt sein. Ferner kann die KunststoffFolie 10 zusätzlich von einem zweiten Folienbändchen 11' in Gegenrichtung zum ersten umwickelt sein, wodurch Kreuzungsstellen entstehen. Für sich allein oder aber auch zusätzlich zum einen Rundumfolienbändchen 11 oder zu beiden 11 und 11' kann die rohrförmige Kunststoff-Folie 10 mit einer Mehrzahl, am Umfang vorzugsweise gleichmässig verteilter längslaufender Folienbändchen 12 verstärkt werden. Weiter ist in Fig. 1 am oberen und rechten Teil der dargestellten Anordnung ersichtlich, dass eine weitere rohrförmige Kunststoff-Mantel-Folie 30 auf die erste, armierte Anordnung 10,11,11',12 aufgebracht wird.

Soweit sind solche Halbfabrikate resp. Verfahren zu deren Herstellung ansich bekannt.

Erfindungsgemäss wird aber nun weitere rohrförmige Kunst stoff-Folie 30 in Form von einzeln, vorzugsweise kontinuierlich zugeführten Folienbahnen 30' aufgebracht, wobei die Folienbahnen 30' an ihren Stosskanten miteinander zur rohrförmigen Mantel-Folie verschweisst oder verklebt werden.

Hierbei können, wie nachfolgend noch näher beschrieben ist, die einzelnen, zur Bildung der Mantel-Folie 30 herangeführten Folienbahnen 30' von Vorratsmitteln über Umlenkrollen an die Mantelfläche des armierten rohrförmigen Extrudates 10 angelegt werden.

Wie Fig. 1 zeigt, können dabei die Folienbahnen 30' in Längsrichtung und gleichzeitig am Umfang verteilt am armierten rohrförmigen Extrudat 10 angelegt werden, oder aber, wie strichpunktiert dargestellt, können die Folienbahnen 30' das armierte rohrförmige Extrudat 10 umkreisen und spiralförmig verlaufend angelegt werden.

Vorzugsweise werden dann die Folienbahnen 30' an ihren Stosskanten 35 im Bereich eines heizbaren inneren Kalibrierungsringes 3 (Fig. 2) in warmweichem Zustand miteinander verbunden.

Vorzugsweise erfolgt ein Verschweissen oder Verkleben in einer Wärmezone, die gestattet, auch die der Armierung dienenden Kunststoffäden bzw. -bändchen 11,11' und 12 kurz fristig weich zu machen, um zwischen der extrudierten rohrförmigen Folie 10 und der Mantel-Folie 30 sowie den Rundumbändchen 11 und 11' bzw. den Längsbändchen 12 eine innige Verbindung herbeizuführen. Insbesondere aber können weiter, wie das in Fig. 1 links unten angedeutet ist, die der Armierung dienenden Folienbändchen 11 mit grösserem Abstand auf die hier innere rohrförmige Folie 10 aufgebracht und das Ganze von der äusseren rohrförmigen Mantel-Folie 30 überdeckt werden, wobei hier die innere 10 und die äussere rohrförmige Folie 30 durch den Lückenbereich 101 der Armierung 11 hindurch miteinander wärmeverbunden werden. Vorzugsweise wird dabei für die innere und die äussere rohrförmige Folie 10 bzw. 30 ein Material von niedrigerem Schmelzpunkt als der Schmelzpunkt des Materials der Armierung 11 verwendet. Auf diese Weise wird gewährleistet, dass die Armierung 11 am "Verschweissungsprozess" nicht teilnimmt und so seine volle Festigkeit beibehält.

Ein auf diese vorbeschriebene Weise erzeugtes Halbfabrikat wird entsprechend seiner kontinuierlichen Zulieferung in einem nachfolgenden Arbeitsprozess abgelängt und dann bodenseitig abgenäht oder gerafft und geknotet oder verklebt oder auf andere Weise zur Herstellung von Behältnissen bearbeitet.

Um das erfindungsgemässe Verfahren rationell durchführen zu können, ist hier eine vorzugsweise mehrstufige Einrichtung gemäss Fig. 2 vorgesehen, die eine Erzeugung aller anhand von Fig. 1 vorbeschriebenen Ausführungsformen gestattet.

In Figur 2 ist mit 1 eine Extrusionsdüse bezeichnet, aus der ein Innenschlauch 10 aus PVC oder dgl. mit einer Wandstärke von beispielsweise 0,3 - 0,5 mm extrudiert wird. Der Innenschlauch 10, der durch die Extrusionsdüse mit einem mit dem Pfeil 2 angedeuteten Innendruck beaufschlagt wird, gelangt in Produktionsrichtung zunächst in einen Führungsring 5 und wird gegen dessen Innenwand aufgeweitet. Die Extrusionsdüse 1 ist dabei vor bzw. im Bereich eines gegebenenfalls heizbaren inneren Kalibrierungsringes 3 angeordnet. Dieser Ring 3 ist hier von einer ersten, beispielsweise im Gegenuhrzeigersinn umlaufend angetriebenen Faden-oder Bändchenverlegervorrichtung 4 umgeben, um die rohrförmige Kunststoff-Folie 10 mit den Bändchen 11 armieren zu können.

Für eine Armierung mit einem weiteren Rundumbändchen 11' ist eine weitere Bändchenverlegervorrichtung 4' vorgesehen, welche vorzugsweise im nun Uhrzeigersinn angetrieben wird. In geeigneter, hier nicht näher gezeigten Weise tragen die Bändchenverlegervorrichtungen 4 und 4' Vorratsspulen 20, von denen über Fadenösen 21 die Bändchen 11 bzw. 11' abgezogen werden.

Für eine Längsarmierung ist der innere Kalibrierungsring 3 anlaufseitig vom genannten Führungsring 5 zur kontinuierlichen Heranführung der Längsbändchen 12 an die KunststoffFolie 10 respektive an den Kalibrierungsring 3 umgeben. Vorzugsweise werden dabei die Längsbändchen 12 von einem üblichen Spulengatter 6 abgezogen.

Um nun die armierte Innen-Folie 10 mit einer weiteren rohrförmigen Mantel-Folie 30 von beliebig geringster Wandstärke, beispielsweise 0,1 mm, zu umgeben, was durch Koextrudieren nicht möglich ist, wird erfindungsgemäss die weitere rohrförmige Kunststoff-Mantel-Folie in Form von einzeln zugeführten Folienbahnen 30' aufgebracht. Hierfür sind ortsfest Vorratsrollen 31 und Umlenkrollen 34 vorgesehen, die die einzelnen Bahnen 30' ringsum an der armierten Innenfolie 10 anlegen, etwa in Höhe eines weiteren inneren Kalibrierungsringes 3. Heizbare Druckrollen 36 im Bereich der Stosskanten der benachbarten Folienbahnen 30' bewirken dann eine kontinuierliche "Verschweissung" dieser Bahnen 30' zur Mantel-Folie 30.

Nach dieser Stosskanten-Verschweissung oder gleichzeitig kann dann ein Thermo-Schweissgerät 32 die innere und die äussere rohrförmige Folie 10 und 30 durch den Lückenbereich der Armierung hindurch miteinander verbinden.

Sollen die Folienbahnen 30' das armierte rohrförmige Extrudat spiralförmig umgeben, kann, ähnlich der vorbeschriebenen Bändchenverlegervorrichtung 4, eine umlaufend angetriebene Bahnverlegervorrichtung angeordnet sein, die die Folienbahn umlaufend verlegt (nicht gezeigt).

Wie ohne weiteres erkennbar, gestattet eine solche Einrichtung die Durchführung aller vorbeschriebenen Verfahrensschnitte einzeln oder miteinander.

Der Abzug des so erzeugten Halbfabrikates erfolgt kontinuierlich und in üblicher Weise, wofür das erzeugte Rundgebilde vorzugsweise zwischen Abzugswalzen 23 zusammengelegt und von diesen weitergeführt wird, etwa direkt zu einer Konfektionsmaschine oder dgl. Entsprechend dieser Abzugsgeschwindigkeit werden auch die Rundumbändchen 11 und 11' bzw. die Längsbändchen 12 bzw. die Folienbahnen 30' für den Mantel 30 abgezogen.

Selbstverständlich sind im Rahmen des vorbeschriebenen Verfahrens und der Einrichtung eine Reihe von Modifikationen denkbar, ohne dabei den Erfindungsgedanken zu verlassen. Insbesondere sind neben den beschriebenen Folienbändchen jede Art von geeigneten Fadenformen denkbar, wie Filamente, Garne, Fäden und dgl. Weiter kann beispielsweise der eine oder andere gegebenenfalls heizbare innere Kalibrierungs ring gegebenenfalls auch kühlbar sein.

Beim Abziehen der zu armierenden und zu ummantelnden inneren Folie von einer Vorratsrolle ist der Vorteil gegeben, dass jederzeit für einen Spulenwechsel an der Bändchen-resp. Bahnverlegervorrichtung die Fabrikation unterbrochen werden kann, was beim Armieren und Ummanteln unmittelbar nach dem Extrudieren schwieriger ist.

In jedem Falle kann das erfindungsgemässe Verfahren auch diskontinuierlich ablaufen.

Weiter können die Verschweissungen auch unter von aussen zugeführter Heissluft unter Druck, beispielsweise mittels umfänglich angeordneter Druckrollen, erfolgen. Dies gilt sowohl für die Verschweissung der Stosskanten als auch der Verschweissung der inneren und der äusseren Folie durch den Lückenbereich der Armierung hindurch.

## Ansprüche

1. Verfahren zur Erzeugung eines rohrförmigen Halbfabrikates aus Kunststoff für die Herstellung von Verpackungssäcken, grossvolumigen Containersäcken oder dgl., bei welchem mindestens ein rohrförmiges Extrudat aus einem Thermoplast mit Folienbändchen oder dgl. aus einem Kunststoff oder dgl. in seiner Umfangsrichtung und/oder in seiner Längsrichtung armiert und eine weitere rohrförmige Mantel-Folie aus einem Thermoplast auf die erste, armierte rohrförmige Kunststoff-Folie aufgebracht wird, wonach das Ganze in warmweichem Zustand miteinander verbunden wird, dadurch gekennzeichnet, dass die weitere rohrförmige Kunststoff-Folie in Form von einzeln, vorzugsweise kontinuierlich zugeführten Folienbahnen aufgebracht wird, wobei die Folienbahnen an ihren Stosskanten miteinander zur rohrförmigen Mantel-Folie verschweisst oder verklebt werden.

2. Verfahren nach Anspruch 1, dadurch gekennzeichnet, dass die einzelnen, zur Bildung der Mantel-Folie herangeführten Folienbahnen von Vorratsmitteln über Umlenkrollen an die Mantelfläche des armierten rohrförmigen Extrudates angelegt werden.

3. Verfahren nach Anspruch 2, dadurch gekennzeichnet, dass die Folienbahnen in Längsrichtung und gleichmässig am Umfang verteilt am armierten rohrförmigen Extrudat angelegt werden.

4. Verfahren nach Anspruch 2, dadurch gekennzeichnet, dass die Folienbahnen das armierte rohrförmige Extrudat umkreisen und spiralförmig verlaufend angelegt werden.

5. Verfahren nach Anspruch 3 oder 4, dadurch gekennzeichnet, dass die Folienbahnen an ihren Stosskanten im Bereich eines heizbaren inneren Kalibrierungsringes in warmweichem Zustand miteinander verbunden werden.

6. Verfahren nach Anspruch 1, dadurch gekennzeichnet, dass die innere und die äussere rohrförmige Folie durch den Lückenbereich der Armierung hindurch miteinander verbunden werden.

7. Verfahren nach Anspruch 6, dadurch gekennzeichnet, dass für die innere und die äussere rohrförmige Folie ein Material von niedrigerem Schmelzpunkt als der Schmelzpunkt des Materials der Armierung verwendet wird.

8. Verfahren nach den Ansprüchen 5 und 7, dadurch gekennzeichnet, dass die innere armierte und die äussere rohrförmige Kunststoff-Folie im Bereich des inneren Kalibrierungsringes in warmweichem Zustand miteinander verbunden werden.

9. Behältnis, hergestellt nach dem Verfahren nach den Ansprüchen 1 bis 8.

*Fig.1*

*Fig. 2*

Europäisches
Patentamt

EUROPÄISCHER RECHERCHENBERICHT

Nummer der Anmeldung

EP 87 11 6047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 788 199 (SATO) <br> * Spalte 1, Zeilen 35-48; Spalte 2, Zeilen 35,36,52,53; Spalte 7, Zeilen 14-58; Figuren 5,9,13-15 * <br> --- | 1-9 | B 29 C 63/06 <br> B 65 D 30/08 |
| Y | EP-A-0 196 492 (HUEMER) <br> --- | 1-9 | |
| Y | US-A-1 985 997 (KEERAN) <br> * Figuren 1-6; Seite 1, linke Spalte, Zeilen 47-53; Seite 1, rechte Spalte, Zeilen 10-32; Seite 2, linke Spalte, Zeilen 30-31,37-40; Ansprüche 1-3 * <br> ----- | 1-9 | |

RECHERCHIERTE SACHGEBIETE (Int. Cl.4)

B 29 C
B 31 C

Der vorliegende Recherchenbericht wurde für alle Patentansprüche erstellt

| Recherchenort | Abschlußdatum der Recherche | Prüfer |
|---|---|---|
| DEN HAAG | 07-01-1988 | KUHN E.F.E. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
    Dokument

EPO FORM 1503 03.82 (P0403)